# EUROPÄISCHE PATENTANMELDUNG

(11) **EP 2 572 833 A2**
(43) Veröffentlichungstag der Anmeldung: **27.03.2013**
(21) Anmeldenummer: 12182894.1
(22) Anmeldetag: 04.09.2012
(51) Int. Cl.: B25F 5/00, B23K 37/02

(54) **Verfahren zur Steuerung von wenigstens einer Steuergröße eines Werkzeugs sowie das Werkzeug**

(30) Priorität: 20.09.2011 DE 102011053799
(71) Anmelder: Dritte Patentportfolio Beteiligungsgesellschaft mbH & Co. KG, 12529 Schönefeld (DE)
(72) Erfinder: Delin, Dr.-Ing. Marcus, 25479 Ellerau (DE); Fuchs, Normen, 18057 Rostock (DE)
(74) Vertreter: Zech, Stefan Markus

(57) **Zusammenfassung**

Die Erfindung betrifft ein handgeführtes Werkzeug (1) und Werkzeugsteuerung (2) umfassend: eine Orientierungsbestimmungseinheit (10), die ausgebildet ist, eine Orientierung des Werkzeugs (1) als Orientierungsdaten oder orientierungsspezifische Daten zu bestimmen, eine Ausgabeeinheit (11), welche mit der Orientierungsbestimmungseinheit (10) in Wirkverbindung steht und Daten an die Werkzeugsteuerung (2) über eine zur Kommunikation geeignete Schnittstelle (12) übermitteln kann, wobei die Orientierungsbestimmungseinheit (10) und/oder die Ausgabeeinheit (11) geeignet ist mindestens einen Steuerparameter, insbesondere eine Vielzahl von Steuerparametern, nach Vergleich der Orientierungsdaten bzw. der orientierungsspezifischen Daten mit Vergleichsgrößen zu ermitteln, wobei der mindestens eine Steuerparameter an die Werkzeugsteuerung (2) zur Steuerung des Werkzeugs (1) übermittelt werden kann.

## Beschreibung

Die Erfindung betrifft ein handgeführtes Werkzeug und Werkzeugsteuerung gemäß Patentanspruch 1, eine Werkzeugorientierungseinheit geeignet zum Zusammenwirken mit einer Werkzeugsteuerung eines handgeführten Werkzeugs gemäß Patentanspruch 12 sowie ein Verfahren zur Bestimmung von wenigstens einer Steuergröße eines handgeführten Werkzeugs mit einer Werkzeugsteuerung gemäß Patentanspruch 13.

Zahlreiche Werkzeuge des Heim- wie des Industriegebrauchs erlauben eine flexible Steuerung mittels einer Werkzeugsteuerung, so dass die Betriebseigenschaften des Werkzeugs geeignet an die Anforderungen des Arbeitsprozesses angepasst werden können. Derartige Anpassungen der Werkzeuge erfolgen typischerweise durch manuelle Wahl an der Werkzeugsteuerung, welche die Betriebseigenschaften des Werkzeuges geeignet einzustellen erlauben. So erfolgt beispielsweise bei manuellen Schweißverfahren eine Steuerung über eine Schweißquellensteuerung durch den Schweißer, indem beispielsweise die erforderlichen Werte für Schweißstrom, Schweißspannung und Drahtvorschub vor Beginn der Arbeiten eingestellt werden. In ähnlicher Weise können die Betriebseigenschaften eines Füge-, Sprüh-, oder Bohr- und Fräswerkzeuges durch den bedienenden Werker vorgewählt werden.

Ist es nun während des Arbeitsprozesses erforderlich, die Betriebseigenschaften des Werkzeuges geeignet anzupassen, wird typischerweise die Arbeit unterbrochen und die erforderliche Einstellung vorgenommen. Um eine unerwünscht lange Unterbrechung zu vermeiden, erlauben zahlreiche Werkzeugsteuerungen eine Anpassung von Steuergrößen oder Steuerparametern mittels Fernregler bzw. mittels einer ferngeregelten Steuerung. Derartige fernregelbare Vorrichtungen müssen jedoch zusätzlich mit dem Werkzeug bzw. mit der Werkzeugsteuerung mitgeführt werden und stellen folglich einen erhöhten Vorbereitungs- und Bedienaufwand dar. Um diesen Nachteil zu vermeiden, ermöglichen manche Werkzeugsteuerungen auch eine integrierte Fernregelung, wobei weiterhin durch den Werker geeignete Einstellungen manuell vorzunehmen sind. Obwohl bei derartigen Ausführungsformen keine zusätzlichen Steuereinheiten mitgeführt werden müssen, kommt es dennoch, wenigstens für eine kurze Zeitspanne, zur Unterbrechung des Arbeitsflusses, während der Werker die erforderlichen Einstellungen vornimmt.

Die vom Werker einzustellenden Steuerparameter sind etwa im Falle des manuellen Schweißens beeinflusst durch den zu verschweißenden Werkstoff, die Materialstärke, die Spaltbreite, die Nahtform sowie die Nahtvorbereitung und Schweißposition. Typischerweise beschränkt sich hierbei eine manuelle Einstellung auf eine geeignete Wahl des Schweißstroms, der Schweißspannung, der Drahtvorschubgeschwindigkeit, des Gasstroms sowie verschiedener Pulseigenschaften von Strom oder Spannung, soweit diese vom manuellen Schweißverfahren unterstützt werden. Um diese Steuergrößen bzw. Steuerparameter geeignet einstellen zu können, muss dem Werker zunächst der Werkstoff bekannt sein, um eine geeignete Wahl des Schweißdrahts sowie des Schweißgases vornehmen zu können. Die geometrischen Steuerparameter der Schweißaufgabe unterliegen weiter typischerweise der Erfahrung des Werkers. Hierbei ist insbesondere durch den Werker auf die Orientierung des Werkzeugs, z.B. etwa des Schweißbrenners, zu achten, da unterschiedliche geometrische Orientierungen des Schweißbrenners voneinander abweichende Anforderungen an die Steuerparameterwahl haben. Ist während der Werkaufgabe bzw. der Schweißaufgabe im Falle des manuellen Schweißens ein häufiger Übergang zwischen verschiedenen geometrischen Schweißpositionen erforderlich, wird die gesamte Arbeitsgeschwindigkeit stark vermindert, da bei jedem Übergang eine manuelle Nachführung bzw. Einstellung verschiedener Steuerparameter durch den Werker vorgenommen werden muss.

Die EP 1 812 200 B1 offenbart eine Schweißvorrichtung, bei der die Lage des Schweißkopfes oder Lageänderungen des Schweißkopfes durch Sensormittel abgefühlt werden sollen. Auf diese Weise sollen Kenngrößen des Schweißverfahrens von der abgefühlten Lage oder Lageänderung hinsichtlich ihrer Werte beeinflusst werden können. Dazu sind Steuermittel vorgesehen, die anhand von Ausgangssignalen der Sensormittel die Lage des Arbeitskopfes bzw. Lageänderungen des Arbeitskopfes erkennen und in Abhängigkeit von Lagekenngrößen das Verfahren beeinflussen. Dabei werden konkret Änderungen einer Position oder Drehlage von einer Steuereinheit an ein Steuergerät übermittelt. Das Steuergerät bestimmt aus der übermittelten Änderung der Position oder Drehlage eine Kenngröße des Schweißverfahrens. Insgesamt kann durch die EP 1 812 200 B1 das Schweißverfahren sicherer und einfacher gestaltet werden. Insgesamt wird die Vorrichtung gemäß EP 1 912 200 B1 jedoch noch als aufwändig, insbesondere in konstruktiver Hinsicht, empfunden.

Der vorliegenden Erfindung liegt folglich die Aufgabe zu Grunde, eine geeignete Steuerung bzw. Regelung von Steuergrößen vorzuschlagen, welche eine verbesserte Einstellung bzw. Anpassung der Werkzeugsteuerung an unterschiedliche geometrische Arbeitsanforderungen ermöglicht. Insbesondere soll die Einstellung von Steuergrößen bzw. Steuerparametern auf einfache Weise ermöglicht werden.

Diese Aufgabe wird durch ein handgeführtes Werkzeug und Werkzeugsteuerung gemäß Patentanspruch 1 gelöst.

Insbesondere wird die Aufgabe durch ein handgeführtes Werkzeug und eine Werkzeugsteuerung gelöst, welche Folgendes umfassend: eine Orientierungsbestimmungseinheit, die ausgebildet ist, eine Orientierung des Werkzeugs als Orientierungsdaten oder orientierungsspezifische Daten zu bestimmen; eine Ausgabeeinheit, welche mit der Orientierungsbestimmungseinheit in Wirkverbindung steht und Daten an die Werkzeugsteuerung über eine zur Kommunikation geeignete Schnittstelle übermitteln kann, wobei die Orientierungsbestimmungseinheit und/oder die Ausgabeeinheit geeignet ist mindestens einen Steuerparameter, insbesondere eine Vielzahl von Steuerparametern, nach Vergleich der Orientierungsdaten bzw. der orientierungsspezifischen Daten mit Vergleichsgrößen zu ermitteln, wobei der mindestens eine Steuerparameter an die Werkzeugsteuerung zur Steuerung des Werkzeugs übermittelt werden kann.

Weiter wird diese Aufgabe durch eine Werkzeugorientierungseinheit gelöst, welche geeignet ist zum Zusammenwirken mit einer Werkzeugsteuerung eines handgeführten Werkzeugs, vorzugsweise geeignet zum Zusammenwirken mit einer Werkzeugsteuerung eines handgeführten Werkzeugs entsprechend dem vorher beschriebenen Werkzeug und Werkzeugsteuerung, welche Folgendes umfasst: eine Orientierungsbestimmungseinheit, welche erlaubt, die Orientierung eines Werkzeugs als Orientierungsdaten oder orientierungsspezifische Daten zu bestimmen; eine Ausgabeeinheit, welche mit der Orientierungsbestimmungseinheit in Wirkverbindung steht und Daten ausgeben kann, wobei die Ausgabe über eine Schnittstelle der Ausgabeeinheit erfolgt, welche geeignet ist, mit einer Schnittstelle der Werkzeugsteuerung, insbesondere einer Schnittstelle zur Kommunikation mit externen Geräten der Werkzeugsteuerung verbunden zu werden, wobei die Orientierungsbestimmungseinheit und/oder die Ausgabeeinheit geeignet ist, mindestens einen Steuerparameter nach Vergleich der Orientierungsdaten bzw. der orientierungsspezifischen Daten mit Vergleichsgrößen, zu ermitteln, wobei der mindestens eine Steuerparameter an die Werkzeugsteuerung zur Steuerung des Werkzeugs übermittelt werden kann.

Weiter wird die Erfindung durch ein Verfahren zur Bestimmung von wenigstens einer Steuergröße eines handgeführten Werkzeugs mit einer Werkzeugsteuerung, insbesondere der obenbeschriebenen Art, gelöst, welches folgende Schritte aufweist: Bestimmen wenigstens einer Orientierung des Werkzeugs im Raum als Orientierungsdaten mittels einer Orientierungsbestimmungseinheit; Bestimmung mindestens eines Steuerparameters des Werkzeuges nach Vergleich der Orientierungsdaten bzw. orientierungsspezifischen Daten mit Vergleichsgrößen durch die Orientierungsbestimmungseinheit; Übermittlung des mindestens einen Steuerparameters an die Werkzeugsteuerung durch eine Ausgabeeinheit, welche mit der Orientierungsbestimmungseinheit in Wirkverbindung steht, über eine zur Kommunikation geeignete Schnittstelle.

Ein wesentlicher Aspekt der Erfindung liegt darin, dass das Werkzeug eine Orientierungsbestimmungseinheit aufweist, die nicht nur in der Lage ist Orientierungsdaten zu bestimmen und zu übermitteln, sondern zugleich auch die Orientierungsdaten bzw. entsprechende orientierungsspezifische Daten in mindestens einen Steuerparameter umzuwandeln. Dadurch wird insgesamt die Steuerung des jeweiligen Prozesses, beispielsweise Schweißprozesses, vereinfacht. In konstruktiver Hinsicht ist das Werkzeug mit der Werkzeugsteuerung ebenfalls vergleichsweise einfach ausgebildet, dadurch, dass der mindestens eine Steuerparameter (Steuergröße) bereits in der Orientierungsbestimmungseinheit bestimmt wird. Eine Aufrüstung eines beispielsweise bereits vorhandenen Steuergerätes ist somit nicht (unbedingt) nötig. Dies verbessert insbesondere die Nachrüstbarkeit von bereits vorhandenen Werkzeugen mit Werkzeugsteuerungen.

Vorzugsweise kann die Orientierungsbestimmungseinheit also mindestens einen Steuerparameter bestimmen. Besonders bevorzugt ist es, wenn die Orientierungsbestimmungseinheit eine Vielzahl von Steuerparametern bzw. Programme (wie beispielsweise Schweißprogramme) mit einer Vielzahl von Steuerparametern, ermitteln kann, so dass diese dem Steuergerät übermittelt werden können. Es ist somit durchaus vorstellbar, dass ganze Programme in dem Werkzeug (beispielsweise in einer Schweißmaschine) geschaltet werden. Diese können ggf. eine Vielzahl von (mehr als zwei oder sogar mehr als fünf) Parameter umfassen. Als Parameter kommen insbesondere ein (Schweiß-)Strom, eine (Schweiß-)Spannung, eine Drahtvorschubgeschwindigkeit, ein Gasstrom und/oder verschiedene Pulseigenschaften (z. B. Pulsfrequenz, Pulsweite) von Strom und Spannung (soweit diese vom Verfahren unterstützt werden) in Frage.

Unter "orientierungsspezifischen Daten" sollen insbesondere Daten verstanden werden, die aus (gemessenen) Orientierungsdaten abgeleitet sind (beispielsweise eine aus zwei gemessenen Orientierungen bestimmte Winkeländerung oder dergleichen).

Die Bestimmung der Orientierung kann hierbei lediglich die räumliche Orientierung des Werkzeuges bei Benutzung betreffen, oder aber auch die räumliche Orientierung zusammen mit weiteren Neigungs- bzw. Rotationseinstellungen, welche erlauben, die Lage eines Werkzeugs exakt und eindeutig im Raum zu charakterisieren. Für einfachere und weniger anspruchsvolle Arbeitsaufgaben ist aber jedoch bereits ausreichend, die Orientierung des Werkzeugs im Sinne einer Raumlage im Bezug auf ein vorab bestimmtes Koordinatensystem bzw. in Bezug auf einen vorab bestimmten Bezugsvektor zu bestimmen. Demgemäß kann es bereits ausreichend sein, die Orientierung eines Werkzeugs mittels lediglich eines Winkelwertes zu charakterisieren, welcher die Abweichung eines eine aktuelle Arbeitsposition charakterisierenden Positionsvektors im Vergleich zu einem zeitlich vorherbestimmten Positionsvektor, insbesondere einem Referenzvektor bestimmt.

Aufgrund der so bestimmten Orientierungsdaten kann die geometrische Orientierung des Werkzeuges im Raum erfasst werden, welche dann erlaubt, eine geeignete Ermittlung von Steuergrößen bzw. Steuerparametern des Werkzeugs vorzunehmen. Hierbei betreffen die Steuerparameter Werte, welche von der Werkzeugssteuerung unmittelbar interpretiert bzw. umgesetzt werden können. Steuergrößen hierzu im Vergleich können auch Werte umfassen, welche vorab noch eine weitere Verarbeitung erfordern bevor sie von der Werkzeugsteuerung umgesetzt werden können. Erfindungsgemäß erfolgt die Übermittlung der Daten (Steuerparameter) über eine zur Kommunikation geeignete Schnittstelle der Werkzeugsteuerung. Hierbei weist die Ausgabeeinheit ebenfalls eine geeignete Schnittstelle auf, welche zur kommunikativen Verbindung mit der Schnittstelle der Werkzeugsteuerung geeignet ist. Eine derartige Schnittstelle der Werkzeugsteuerung kann beispielsweise eine Fernreglerschnittstelle sein, oder aber auch jede andere geeignete Schnittstelle, über welche die Daten übermittelt werden können. Insbesondere erfolgt die Übermittlung der Daten über eine Schnittstelle zur wechselseitigen Kommunikation.

Werden die Orientierungsdaten bzw. die orientierungsspezifischen Daten mit geeigneten Vergleichsgrößen verglichen, können geeignete Steuergrößen des Werkzeugs bzw. Steuerparameter des Werkzeugs derart ermittelt werden, dass eine geeignete steuerungstechnische Einstellung des Werkzeugbetriebs möglich wird. Folglich kann eine geeignete Steuerung des Werkzeugs die geometrischen Anforderungen, welche mittels der Orientierungsdaten durch die Orientierungsbestimmungseinheit charakterisiert werden, berücksichtigen, und folglich zu einem verbesserten Werkergebnis beitragen. Die vorliegende Erfindung erfordert keine manuelle Einstellung und damit auch keine arbeitstechnische Unterbrechung des Werkvorganges und gewährleistet folglich einen effizienteren Arbeitsablauf. Die Ermittlung der wenigstens einen Steuergröße des Werkzeuges bzw. der Steuerparameter kann hierbei durch die Orientierungsbestimmungseinheit und/oder die Ausgabeeinheit erfolgen. Entscheidend ist, dass die betreffende Ermittlung direkt oder indirekt die als Orientierungsdaten bestimmte geometrische Werkposition des Werkzeugs berücksichtigt. Demgemäß ist eine völlig selbstständige Einstellung bzw. Nachführung der Steuergrößen bzw. der Steuerparameter möglich.

Ein weiterer wesentlicher Punkt der vorliegenden Erfindung ist darin zu sehen, dass die Übermittlung der Daten an die Werkzeugsteuerung über eine zur Kommunikation geeignete Schnittstelle übermittelt wird. Folglich kann eine Werkzeugsteuerung mit einer Werkzeugorientierungseinheit nachgerüstet werden, und ermöglicht folglich auch eine geeignete Einstellung bzw. Ermittlung wenigstens einer Steuergröße bzw. von Steuerparametern in Abhängigkeit der Orientierung des Werkzeugs. Die Nachrüstung einer Werkzeugsteuerung kann hierbei über eine externe Schnittstelle bzw. über eine interne Schnittstelle der Werkzeugsteuerung erfolgen. Damit können auch eine nicht mit einer Orientierungsbestimmungseinheit ausgestattete Werkzeugsteuerungen modular erweitert werden, so dass sie an geometrisch anspruchsvolle Werkarbeiten angepasst werden kann.

Die Orientierungsbestimmungseinheit und/oder die Ausgabeeinheit ist geeignet, Steuerparameter, insbesondere wenigstens eine Steuergröße zu ermitteln, welche an die Werkzeugsteuerung zur Steuerung des Werkzeugs übermittelt werden kann. Die Orientierungsbestimmungseinheit und/oder die Ausgabeeinheit stellen damit vergleichbar einer übergeordneten Steuerung bzw. Regelung der Werkzeugsteuerung wenigstens eine Steuergröße bzw. Steuerparameter zur Verfügung, welche zur Steuerung des Werkzeuges durch die Werkzeugsteuerung verarbeitet werden können. Eine rechenintensive Verarbeitung der Orientierungsdaten, welche durch die Orientierungsbestimmungseinheit bestimmt worden sind, kann folglich vermieden werden. Bevorzugtermaßen kommunizieren die Ausgabeeinheit und die Werkzeugsteuerung aufgrund eines vorbestimmten Kommunikationsprotokolls. Sind die Orientierungsbestimmungseinheit und/oder die Ausgabeeinheit an dieses Protokoll angepasst, kann eine Übermittlung der wenigstens einen Steuergröße bzw. der Steuerparameter an die Werkzeugsteuerung besonders vorteilhaft erfolgen.

In einer bevorzugten Ausführungsform bilden die Orientierungsbestimmungseinheit und die Ausgabeeinheit ein gemeinsames Modul (das separat von einem Steuergerät bzw. einer Werkzeugsteuerung ausgebildet ist) bzw. sind Bestandteile eines solchen. Das Modul kann in einem gemeinsamen Gehäuse untergebracht sein (bzw. ein solches umfassen). Weiterhin kann das Modul aus Orientierungsbestimmungseinheit und Ausgabeeinheit mit der Werkzeugsteuerung verbunden sein oder mit dem handgeführten Werkzeug verbunden sein. In einer konkreten Ausführungsform ist das Modul mit der Werkzeugsteuerung verbunden bzw. an dieser angebracht. Durch die modulartige Ausbildung (als Baueinheit oder Baugruppe) von Orientierungsbestimmungseinheit und Ausgabeeinheit kann das Werkzeug mit der Werkzeugsteuerung in konstruktiver Hinsicht weiter vereinfacht werden. Eine Umrüstbarkeit bzw. Aufrüstbarkeit wird verbessert. Insgesamt können Kosten eingespart werden.

In einer weiteren bevorzugten Ausführungsform umfasst die Orientierungsbestimmungseinheit einen Speicher und ist ausgebildet, um eine Abhängigkeit zwischen mindestens einem Steuerparameter und den Orientierungsdaten, insbesondere Arbeitspositionen bzw. Schweißpositionen, zu dokumentieren. Dadurch kann ein Bezug zwischen Orientierungsdaten, Steuerparametern und dem Arbeitsergebnis dokumentiert und ausgewertet werden. Dies kann weiter die Steuerung des Werkzeuges verbessern. Beispielsweise kann überprüft werden, ob der bestimmte Steuerparameter bei einer bestimmten Orientierung bzw. Arbeitsposition des Werkzeuges zu einem zufriedenstellenden Arbeitsergebnis geführt hat oder nicht. Bei einer negativen Feststellung kann eine Nachregelung auf einfache Weise erfolgen. Insbesondere wird auch die Sicherheit des Arbeitsergebnisses, beispielsweise einer geschweißten Verbindung zwischen zwei Körpern, verbessert.

Gemäß einer weiteren Ausführungsform des erfindungsgemäßen Werkzeugs und der Werkzeugsteuerung ist die Ausgabeeinheit geeignet, an die Werkzeugsteuerung Steuerparameter, insbesondere wenigstens eine Steuergröße zu übermitteln, welche an ein Kommunikationsprotokoll der Werkzeugsteuerung angepasst sind/ist. Ein derartiges Kommunikationsprotokoll erleichtert die Erweiterung der Werkzeugsteuerung durch die Orientierungsbestimmungseinheit und/oder die Ausgabeeinheit und verhindert Kommunikationsprobleme. Weiter ist eine leichte Erweiterung im Sinne des Plug-and-Play-Prinzips möglich.

Gemäß einer weiteren Ausführungsform des erfindungsgemäßen Werkzeugs und Werkzeugsteuerung ist die Orientierungsbestimmungseinheit und/oder die Ausgabeeinheit als übergeordnete Regelung der Werkzeugsteuerung vorgeschaltet. Die Regelung kann hierbei in Bezug auf vorbestimmte Steuergrößen bzw. vorbestimmte Steuerparameter erfolgen, oder aber auch den gesamten Steuerumfang betreffen. Zur Ausführung der Regelung werden der Werkzeugsteuerung über die Ausgabeeinheit Daten übermittelt, welche die Werkzeugsteuerung in vorbestimmten Zeitabschnitten, insbesondere in zyklischen Zeitabschnitten aufnimmt und umsetzt. Eine Übermittlung der wenigstens einen Steuergröße bzw. von Steuerparametern ist möglich. Die übergeordnete Regelung ermöglicht folglich eine geeignete kontinuierliche Regelung des Werkzeugs durch die Werkzeugsteuerung. Alternativ ist auch eine übergeordnete Steuerung zur Steuerung der Werkzeugsteuerung denkbar.

Entsprechend einem weiteren Aspekt der vorliegenden Erfindung weist die Orientierungsbestimmungseinheit und/oder die Ausgabeeinheit ein, ggf. analoges oder digitales steuerbares Potentiometer auf, welches erlaubt, den mindestens einen Steuerparameter für die Werkzeugsteuerung einzustellen.

Entsprechend einer weiteren bevorzugten Ausführungsform des erfindungsgemäßen Werkzeugs und Werkzeugsteuerung werden die Orientierungsdaten bzw. orientierungsspezifischen Daten relativ zu einem Referenzwert ermittelt. Insbesondere erfolgt die Ermittlung relativ zu einem Referenzwert mittels eines steuerbaren Potentiometers. Abweichend von einer absoluten Ermittlung eines Referenzwertes, welcher etwa dadurch erfolgt, dass Orientierungsdaten bzw. orientierungsspezifische Daten direkt vorgegeben werden, erlaubt die Ermittlung relativ zu einem Referenzwert vor Beginn eines Werkprozesses einen Basiswert zu definieren, bezüglich diesen alle weiteren Orientierungsdaten bzw. orientierungsspezifischen Daten ermittelt werden. Wird beispielsweise vor Beginn eines Werkprozesses als Basiswert für eine Orientierung eine Steuergröße bzw. ein Steuerparameter als 100% festgelegt, können bei weiteren Änderungen in den Orientierungsdaten die betreffenden Steuergrößen bzw. Steuerparameter relativ zu diesem Basiswert verändert werden. Es erfolgt folglich eine prozentuale Veränderung, welche keine weiteren Berechnungsprozesse mehr erfordert. So erweist es sich beispielsweise im Falle eines Schweißwerkzeugs als technologisch sinnvoll, das Schweißen in einer horizontalen Lage mit lediglich 50 bis 60% des Schweißstroms bzw. der Schweißspannung im Vergleich zu einer Überkopfposition durchzuführen. Erfolgt also der Wechsel des Schweißwerkzeuges von einer Überkopfposition, welche beispielsweise als Grundposition definiert werden kann, d.h. als Basiswert definiert werden kann, kann die Schweißspannung bzw. der Schweißstrom als geeigneter Steuerparameter relativ zu diesem Basiswert als Referenzwert ermittelt werden. Die Ermittlung relativ zu einem Referenzwert stellt eine sehr vorteilhafte Ausführungsform des Werkzeuges mit Werkzeugsteuerung dar.

Eine geeignete Realisierung erfolgt beispielsweise, indem eine voreingestellte Steuerspannung als Referenzwert über ein steuerbares Potentiometer die Spannung in Abhängigkeit von der Werkzeugorientierung vermindert bzw. erhöht. Eine solche Voreinstellung kann beispielsweise auch über einen Fernregler erfolgen oder aber auch in der Werkzeugsteuerung bereits integriert sein. Je nach Ausführungsform hat der Werker die Möglichkeit, einen oder mehrere Basiswerte als Referenzwert vorzugeben, zwischen welchen eine geeignete Interpolation erfolgt, wenn sich die Orientierung des Werkzeuges verändert hat.

Insbesondere ist die Ermittlung von orientierungsspezifischen Daten bzw. von mindestens einer Steuergröße relativ zu einem Referenzwert in Bezug auf vordefinierte Orientierungsbereiche, vorzugsweise Winkelbereiche, welche die Orientierung charakterisieren, möglich. So kann etwa im Falle eines Schweißwerkzeuges eine Unterteilung gemäß der in der DIN EN ISO 6947 definierten Schweißpositionen PA, PB, PC, PD und PE erfolgen. So ist beispielsweise jedem Orientierungsbereich ein vorbestimmter Relativwert zugeordnet, so dass bei Erreichen einer vorbestimmten Werkzeugorientierung die orientierungsspezifischen Daten bzw. mindestens eine Steuergröße relativ zu diesen Werten ermittelt werden können.

Gemäß einer weiteren bevorzugten Ausführungsform der Erfindung werden die orientierungsspezifischen Daten bzw. die mindestens eine Steuergröße in einer Relativwertgenerierungseinheit als relative Größen ausgegeben, die einen von der Werkzeugsteuerung vorgegebenen Stellwert um einen bestimmten Prozentsatz erhöhen oder erniedrigen derart, dass die Orientierungsbestimmungseinheit und/oder die Ausgabeeinheit als übergeordnete Regelung ein von der Werkzeugsteuerung vorgegebenes, eingehendes Stellsignal unter Verwendung der relativen Größe der Relativwertgenerierungseinheit um den bestimmten Prozentsatz erhöht oder erniedrigt und wieder an die Werkzeugsteuerung abgibt.

Gemäß einer weiterführenden Ausführungsform wird der Referenzwert über die Schnittstelle an die Orientierungsbestimmungseinheit und/oder die Ausgabeeinheit übermittelt. Die Vorgabe des Referenzwertes wird folglich auf Seite der Werkzeugsteuerung vorgenommen. Alternativ ist ebenso denkbar, die Bestimmung des Referenzwertes auf Seite der Orientierungsbestimmungseinheit und/oder der Ausgabeeinheit vorzunehmen. Wird der Referenzwert jedoch auf Seite der Werkzeugsteuerung vorgenommen, steht dieser vorteilhaft auch weiteren anderen Funktionen der Werkzeugsteuerung zur Verfügung und kann von diesen weiter geeignet verarbeitet werden. Folglich ist es nur erforderlich, in der Orientierungsbestimmungseinheit und/oder Ausgabeeinheit Relativwerte zu diesem Referenzwert zu erzeugen, um diesen dann erneut der Werkzeugsteuerung zur geeigneten Steuerung des Werkzeuges zuzuführen.

Gemäß einer weiteren Ausführungsform des erfindungsgemäßen Werkzeugs und der Werkzeugsteuerung ist der Referenzwert durch die Orientierungsbestimmungseinheit und/oder die Ausgabeeinheit fest vorgegeben. Eine solche Ausführungsform ist insbesondere dann vorteilhaft, wenn die Schnittstelle der Werkzeugsteuerung keine Übermittlung des Referenzwerts an die Ausgabeeinheit bzw. die Orientierungsbestimmungseinheit erlaubt.

Entsprechend einer weiteren besonders bevorzugten Ausführungsform der vorliegenden Erfindung ist die Schnittstelle geeignet zur Kommunikation mit externen Geräten, insbesondere umfasst sie eine Fernreglerschnittstelle. Hierbei ist anzuführen, dass der Begriff der Fernregelung in diesem Dokument sich lediglich auf die Möglichkeit der Einstellung von verschiedenen Steuergrößen bzw. Steuerparametern bezieht, jedoch eine Regelung im Sinne einer regelungstechnisch kontinuierlichen Nachführung in Abhängigkeit einer vorbestimmten Größe nicht mit umfasst ist. Eine Fernregelung bezieht sich damit im eigentlichen Sinne stets auf eine Steuerung, welche gemäß den Ausdruckskonventionen insbesondere im Bereich der Schweißwerkzeuge als Fernregelung bezeichnet wird. Dennoch erlaubt eine Fernreglerschnittstelle gemäß der vorliegenden Ausführungsform, dass Steuergrößen und Steuerparameter derart an die Werkzeugsteuerung übertragen werden können, dass eine Regelung der Steuerung des Werkzeuges mittels einer externen und damit übergeordneten Regelung möglich ist. Ausführungsgemäß erlaubt die Schnittstelle zur Kommunikation mit externen Geräten eine kontinuierliche Übermittlung von Daten über die Fernreglerschnittstelle, welche ebenso in kontinuierlichen Zeitabständen von der Werkzeugsteuerung in geeignete Steuerparameter übersetzt werden.

Entsprechend einer weiteren bevorzugten Ausführungsform des erfindungsgemäßen Werkzeugs mit Werkzeugsteuerung weist die Werkzeugsteuerung oder die Orientierungsbestimmungseinheit eine Positionierungseinheit bzw. eine Positionierungsunterstützungseinheit auf, die erlaubt, Orientierungsdaten bzw. orientierungsspezifische Daten zur Positionierung des Werkzeugs bzw. zur Unterstützung der Positionierung des Werkzeugs zu verarbeiten. Eine Positionierungseinheit ermöglicht hierbei dem Werker, die gewünschte Position durch das handgeführte Werkzeug aktiv einzustellen. Die Positionierungsunterstützungseinheit erlaubt im Gegensatz jedoch nur eine passive Unterstützung der Positionierung des handgeführten Werkzeugs durch den Werker. Sowohl Positionierungseinheit als auch Positionierungsunterstützungseinheit sind geeignet zur Generierung von geeigneten Steuerdaten, welche an weitere Einrichtungen zur Positionierung des Werkzeugs weitergegeben werden können. Im Falle einer Positionierungsunterstützung kann beispielsweise dem Werker durch eine geeignete optische Darstellung aufgezeigt werden, ob eine gewünschte Positionierung erfolgt ist oder nicht. Eine solche optische Darstellung kann mittels einfacher Lichtsignale erfolgen, jedoch auch mittels graphischer Darstellungen der Werkzeugführung. Eine Positionierungseinheit kann beispielsweise mit aktiven, motorgetriebenen Vorrichtungen in Wirkverbindung stehen, welche eine Positionierung des handgeführten Werkzeuges erleichtern. Sowohl im Falle der Positionierungsunterstützungseinheit als auch im Falle der Positionierungseinheit werden die Daten auf Grundlage der Orientierungsdaten bzw. der orientierungsspezifischen Daten generiert.

Entsprechend einer weiter bevorzugten Ausführungsform der Erfindung umfasst die Orientierungsbestimmungseinheit wenigstens einen Sensor, welcher erlaubt, wenigstens eine Lage und/oder Orientierung des Werkzeugs zu bestimmen. Ein solcher Sensor kann beispielsweise ein Neigungssensor bzw. ein Beschleunigungssensor sein. Aufgrund der Sensordaten ist es der Orientierungsbestimmungseinheit möglich, die Orientierung des Werkzeugs als Orientierungsdaten zu bestimmen. Der Sensor ist hierbei zweckmäßigerweise mit dem Werkzeug verbunden. Eine Kommunikation zwischen dem Sensor und der Orientierungsbestimmungseinheit kann beispielsweise kabellos oder auch kabelgebunden erfolgen. Besonders vorzugsweise ist der Sensor ein dreidimensionaler Beschleunigungssensor, welcher Beschleunigungen in allen drei Raumrichtungen zu bestimmen erlaubt. Der Sensor ist hierbei wie die Orientierungsbestimmungseinheit und/oder die Ausgabeeinheit auch zur Nachrüstung des Werkzeuges bzw. der Werkzeugsteuerung vorgesehen.

Entsprechend einer weiteren Ausführungsform der Erfindung ist das vorliegende Werkzeug ein Schweißwerkzeug. Alternativ kann das Werkzeug auch als Fügewerkzeug bzw. als Bohr- oder Fräswerkzeug oder ein Werkzeug zur Durchführung von Beschichtungen, beispielsweise eine Sprühpistole (Sprüh- oder Spritzwerkzeug), ist.

Gemäß einem weiteren Aspekt der vorliegenden Erfindung umfasst die Schnittstelle der Werkzeugsteuerung ein integriertes Bussystem einer Anlagensteuerung. Eine geeignete Busschnittstelle ist etwa ein CAN-Bus, der den Austausch von digitalen Daten ermöglicht.

Gemäß einer ersten bevorzugten Ausführungsform des erfindungsgemäßen Verfahrens werden die orientierungsspezifischen Daten wenigstens teilweise aus einem Vergleich von ersten Orientierungsdaten und zweiten Orientierungsdaten berechnet. Ein derartiger Vergleich kann sich auf die Orientierung des Werkzeuges im Raum relativ zu einem Koordinatensystem bzw. zu einem festen Bezugspunkt beziehen oder aber auch noch weiterführende Orientierungsgrößen umfassen. Beispielsweise kann ein Vergleich von ersten Orientierungsdaten und zweiten Orientierungsdaten auch die Neigung bzw. Rotation des Werkzeuges relativ zu einem bestimmten Positionsvektor im Raum umfassen. Die orientierungsspezifischen Daten können hierbei entweder als Vektordaten oder Winkeldaten berechnet werden oder auch noch weiterführende spezifische Größen enthalten. Die orientierungsspezifischen Daten können auch Steuergrößen bzw. Steuerparameter umfassen, welche von der Werkzeugsteuerung geeignet umgesetzt bzw. verarbeitet werden können. So kann beispielsweise aus dem Vergleich von ersten Orientierungsdaten und zweiten Orientierungsdaten ein Winkelbereich bestimmt werden, welcher wiederum die Bestimmung eines relativen Wertes für eine Steuergröße bzw. einen Steuerparameter relativ zu einem Referenzwert erlaubt.

Entsprechend einem weiteren Aspekt des erfindungsgemäßen Verfahrens werden die Orientierungsdaten bzw. die orientierungsspezifischen Daten aus wenigstens einer Winkeländerung des Werkzeugs im Raum bestimmt. Die Winkeländerung bezieht sich hierbei typischerweise auf die Winkelabweichung eines Positionsvektors im Vergleich zu einem zeitlich vorhergehenden Positionsvektor bzw. zu einem vorbestimmten Referenzvektor. Hierbei kann es ausreichend sein, lediglich einen Winkelwert der beiden zum Vergleich stehenden Positionsvektoren zu berechnen. Alternativ können auch zwei Winkelwerte im Sinne eines Polarwinkels und Azimutwinkels bestimmt werden, um weitere Informationen zur Werkzeugsteuerung zur Verfügung zu haben. Fernerhin ist es möglich, die Neigung bzw. die Rotation eines Werkzeugs relativ zu einem Positionsvektor zu bestimmen. Zu dieser Bestimmung eignen sich ebenfalls entweder eine Winkelgröße bzw. zwei Winkel. Die Bestimmung der Orientierungsdaten bzw. orientierungsspezifischen Daten aus wenigstens einer Winkeländerung erlaubt folglich eine einfache aber auch vollständige Beschreibung der Orientierung des Werkzeuges im Raum und ist folglich ausreichend für eine effiziente Steuerung des Werkzeugs.

Gemäß einer weiteren Ausführungsform des erfindungsgemäßen Verfahrens erfolgt die Kommunikation über die Schnittstelle analog. Alternativ hierzu kann die Kommunikation über die Schnittstelle auch digital erfolgen. Eine analoge Kommunikation ermöglichen beispielsweise eine kontinuierliche Veränderung einer Steuergröße bzw. eines Steuerparameters und erlauben etwa eine relative Anpassung dieser Größen mit Hilfe eines Potentiometers. Eine digitale Kommunikation ermöglicht lediglich eine diskrete Kommunikation, die quasi kontinuierlich erfolgen kann. Eine diskrete Kommunikation eignet sich insbesondere dann, wenn lediglich vorbestimmte Orientierungsbereiche unterschieden werden müssen, bei denen unterschiedliche Steuergrößen bzw. Steuerparameter zur Steuerung des Werkzeuges herangezogen werden.

Entsprechend einer weiteren Ausführungsform des erfindungsgemäßen Verfahrens erfolgt der Vergleich der Orientierungsdaten bzw. orientierungsspezifischen Daten mit Vergleichsgrößen in einer analogen Regelung. Eine analoge Regelung erlaubt eine kontinuierliche Einstellung geeigneter Steuergrößen bzw. Steuerparameter und ermöglicht folglich eine besonders effiziente Einstellung dieser Größen. Ausführungsgemäß kann eine derartige analoge Regelung auch unter Verwendung eines Regelbahnpotentiometers erfolgen. Die Vergleichsgrößen können hierbei vorbestimmte Referenzwerte sein, zu welchen die Steuergrößen bzw. Steuerparameter relativ in ihrer Größe eingestellt werden.

Gemäß einer anderen, alternativen Ausführungsform des erfindungsgemäßen Verfahrens erfolgt der Vergleich der Orientierungsdaten bzw. orientierungsspezifischen Daten mit Vergleichsgrößen durch einen Vergleich mit gespeicherten Vergleichsdaten. Derartige Vergleichsdaten können beispielsweise in einer Liste abgelegt sein, auf welche bei jedem Vergleichsvorgang zugegriffen werden kann. Die Vergleichsdaten betreffen typischerweise Werte von Steuergrößen bzw. Steuerparameter in Bezug auf vorbestimmte Orientierungen bzw. Orientierungsbereiche des Werkzeuges. Gemäß einer anderen Ausführungsform ist es aber auch möglich, bei jedem Vergleichsvorgang die Vergleichsdaten individuell zu generieren.

Gemäß einer weiteren Ausführungsform des erfindungsgemäßen Verfahrens erfolgt die Bestimmung der orientierungsspezifischen Daten relativ zu einem vorbestimmten Referenzwert, wobei der Referenzwert in Abhängigkeit von werkzeugspezifischen und/oder materialspezifischen Betriebsgrößen bestimmt wird. Der Referenzwert kann hierzu ausdrücklich der Werkzeugsteuerung bzw. der Orientierungsbestimmungseinheit und/oder Ausgabeeinheit vorgegeben werden, oder aber erst durch diese nach Eingabe durch einen Werker erzeugt werden. Die werkzeugspezifischen und/oder materialspezifischen Betriebsgrößen können auch mittels einer Menüauswahl an der Werkzeugsteuerung bzw. der Orientierungsbestimmungseinheit und/oder der Ausgabeeinheit ausgewählt werden. Hierbei sind die Betriebsgrößen bereits in den betreffenden Bauteilen vorprogrammiert.

Gemäß einer weiteren Ausführungsform des erfindungsgemäßen Verfahrens erfolgt die Bestimmung der wenigstens einen Steuergröße in Abhängigkeit vorbestimmter, möglicher Orientierungsbereiche, insbesondere in Abhängigkeit vorbestimmter, möglicher Orientierungssektoren des Werkzeuges. Die Orientierungsbereiche bzw. Orientierungssektoren können hierbei durch vorbestimmte Raumwinkelbereiche bestimmt sein. Je nach Wahl geeigneter Orientierungsdaten können die Orientierungsbereiche vorbestimmte Wertebereiche bzw. Datenbereiche betreffen. Im Falle der Orientierungssektoren ist es besonders bevorzugt, wenn diese mittels der Unterscheidung gemäß der in der DIN EN ISO 6947 beschriebenen Schweißpositionen PA, PB, PC, PD und PE definiert werden.

Gemäß einer weiteren Ausführungsform des erfindungsgemäßen Verfahrens erfolgt das Bestimmen wenigstens einer Orientierung des Werkzeugs im Raum sensorisch. Die sensorische Bestimmung der Orientierung des Werkzeugs kann hierbei mittels aller technisch geeigneter Sensoren erfolgen.

In einer ersten bevorzugten Alternative des Verfahrens kann die Steuerung analog erfolgen. Dazu können Orientierungsdaten (bzw. Orientierungsbereiche) und/oder Arbeitspositionen (beispielsweise Schweißpositionen) definiert werden. Es kann ein (ggf. automatisch steuerbares) Potentiometer zum Einsatz kommen. Steuerungsparameter können kontinuierlich variiert werden. Ein Ausgangssignal einer Schnittstelle (insbesondere eines Fernreglereingangs) kann als Referenzsignal für das Potentiometer dienen. Die Anpassung des (steuerbaren) Potentiometers kann auf einen (manuell eingestellten) Ausgangswert (z. B. einem 100%-Referenzsignal) basieren. Das Eingangssignal bzw. eine Steuerspannung kann automatisch in Abhängigkeit von einer Werkzeugorientierung (prozentual) gesteuert werden, ohne absolute Werte verwenden zu müssen. Es kann eine Prozessdokumentation stattfinden (wobei beispielsweise ein Bezug zwischen einer Arbeitsposition, Prozessparametern und einem Arbeitsergebnis hergestellt und dokumentiert werden kann).

In einer weiteren bevorzugten Alternative des Verfahrens kann die Steuerung digital erfolgen. Dazu können ebenfalls Orientierungsdaten (Orientierungsbereiche) und Arbeitsposition (beispielsweise Schweißposition) definiert werden. Weiterhin kann ein Winkelbereich in Sektoren aufgeteilt werden, beispielsweise entsprechend einer Arbeitsposition (Schweißposition, z. B. PA-E) und eine Ausgabe erfolgen, in welchem Sektor sich das Werkzeug befindet (alternativ können Quadranten für beispielsweise das Orbitalschweißen definiert werden). Es kann dabei ein digitales (ebenfalls positionsabhängiges) Steuersignal zum Einsatz kommen. Eine diskontinuierliche (diskrete) Variation wird durch eine digitale Steuerung ermöglicht. Weiterhin ist eine Programmierung verschiedener Prozessparameter in Kombination als Parameterprogramm bevorzugt. Das Parameterprogramm kann in Abhängigkeit von der Handgeräteorientierung ausgewählt werden. Eine Anwahl kann ausgehend von dem digitalen Steuersignal erfolgen.

Bevorzugte Verfahren, in denen die Erfindung zum Einsatz kommt, sind beispielsweise das Schweißen (beispielsweise Metallschutzgas-Schweißen oder das Wolfram-Inertgas-Schweißen oder Bolzenschweißen). Alternative Verfahren sind beispielsweise Setzverfahren für mechanische Fügeelemente (wie beispielsweise Nieten, Blindnieten, Schließringbolzen und dergleichen) oder das Bohren.

Eine Datenübertragung (beispielsweise zwischen Orientierungsbestimmungseinheit und Steuergerät) kann drahtgebunden oder drahtlos, beispielsweise per Funk oder Infrarot erfolgen. Eine Positionierung oder Orientierung (beispielsweise eine Prüfung, ob das Werkzeug senkrecht positioniert ist) kann über ein Anzeigeelement, wie beispielsweise eine (Rot-Grün-)Diode erfolgen. Eine besonders bevorzugte Weiterbildung besteht darin, den gesamten Prozess hinsichtlich der Arbeitsposition und/oder Prozessparametern und/oder dem Arbeitsergebnis zu dokumentieren.

Weitere Ausführungsformen der Erfindung ergeben sich aus den Unteransprüchen.

Nachfolgend wird die Erfindung anhand von Ausführungsbeispielen beschrieben, die anhand der Abbildung näher erläutert werden. Hierbei zeigen:
- Fig. 1: eine erste Ausführungsform des erfindungsgemäßen handgeführten Werkzeugs mit Werkzeugsteuerung;
- Fig. 2: eine zweite Ausführungsform des erfindungsgemäßen handgeführten Werkzeugs mit Werkzeugsteuerung;
- Fig. 3: eine schematische Darstellung der Ermittlung der Orientierung des Werkzeugs als Orientierungsdaten entsprechend einer weiteren Ausführungsform der Erfindung;
- Fig. 4: eine Detailansicht der in Fig. 1 dargestellten Ausführungsform des erfindungsgemäßen handgeführten Werkzeugs mit Werkzeugsteuerung;
- Fig. 5: ein Flussdiagramm gemäß einer weiteren Ausführungsform des erfindungsgemäßen Verfahrens zur Bestimmung von wenigstens einer Steuergröße eines handgeführten Werkzeugs mit Werkzeugsteuerung;
- Fig. 6: ein Flussdiagramm zur Darstellung einer weiteren Ausführungsform des erfindungsgemäßen Verfahrens zur Bestimmung von wenigstens einer Steuergröße eines handgeführten Werkzeugs mit Werkzeugsteuerung;
- Fig. 7: eine schematische Darstellung zur Veranschaulichung der Steuerung einer Steuergröße bzw. eines Steuerparameters einer Schweißsteuerung relativ zu einem vorgegebenen Referenzwert;
- Fig. 8a: eine schematische Darstellung zur Veranschaulichung unterschiedlicher Orientierungssektoren in einer analogen Steuerung durch die Werkzeugorientierungseinheit;
- Fig. 8b: zwei mögliche Orientierungssektoren gemäß einer weiteren Ausführungsform der Erfindung;

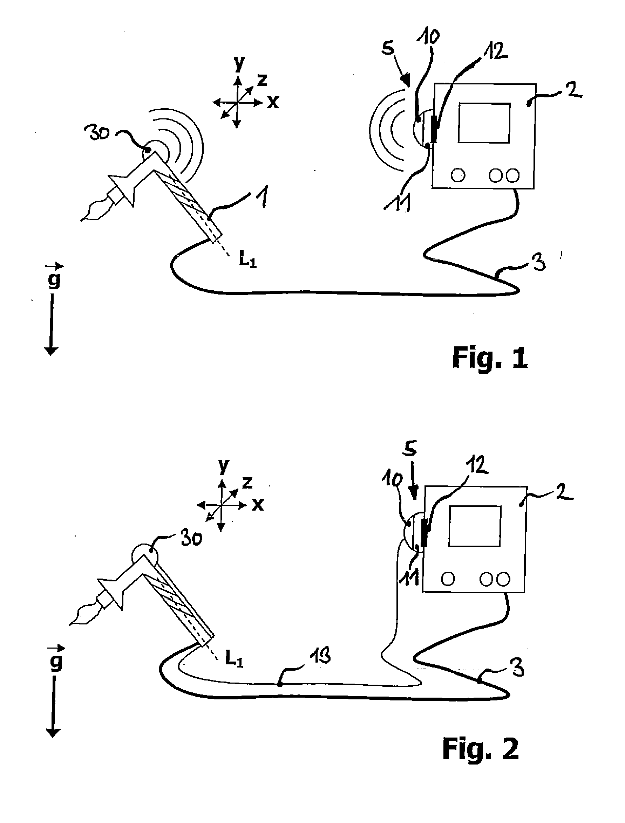

Fig. 1 zeigt eine schematische Darstellung einer ersten Ausführungsform des erfindungsgemäßen handgeführten Werkzeugs 1 mit Werkzeugsteuerung 2. Hierbei ist die Werkzeugsteuerung 2 mit dem Werkzeug 1 über eine Verbindung 3 verbunden. Die Verbindung 3 kann lediglich eine elektrische Verbindung wie auch weitere andere Verbindungen, beispielsweise eine Gasverbindung, umfassen. Gemäß der vorliegenden Ausführungsform handelt es sich bei dem Werkzeug 1 um einen Schweißbrenner, welcher durch eine Schweißbrennersteuerung 2 hinsichtlich verschiedener Betriebszustände geeignet gesteuert werden kann. Die Betriebszustände werden durch vorbestimmte Steuergrößen bzw. Steuerparameter in der Werkzeugsteuerung 2 eingestellt.

Fernerhin umfasst die Werkzeugsteuerung 2 eine Werkzeugorientierungseinheit 5, welche eine Orientierungsbestimmungseinheit 10 sowie eine Ausgabeeinheit 11 umfasst. Die Ausgabeeinheit 11 weist zudem eine Schnittstelle 12' (vorliegend nicht gezeigt) auf, welche mit einer entsprechenden Gegenschnittstelle, Schnittstelle 12, der Werkzeugsteuerung 2 zur Kommunikation verbunden ist. Weiterhin umfasst die Werkzeugorientierungseinheit 5 einen Sensor 30, welcher mit dem Werkzeug 1 fest verbunden ist. Ausführungsgemäß kann die Orientierung des Werkzeuges 1 mittels des Sensors 30 in geeigneter Weise als Orientierungsdaten erfasst werden und an die Orientierungsbestimmungseinheit 10 übermittelt werden. Alternativ ist auch eine Erfassung anderer geeigneter Daten durch den Sensor 30 vorgesehen, welche nach Übermittelung an die Orientierungsbestimmungseinheit 10 geeignet in Orientierungsdaten umgewandelt werden können. Die Orientierungsbestimmungseinheit 10 kann die Orientierungsdaten bzw. orientierungsspezifische Daten, welche aus den Orientierungsdaten durch weitere Verarbeitung berechnet worden sind, ermitteln, sowie daraus bestimmte Steuerparameter an die Ausgabeeinheit 11 übertragen, welche ihrerseits die Steuerparameter an die Werkzeugsteuerung 2 übermittelt. Die Werkzeugsteuerung 2 steuert aufgrund der Steuerparameter der Werkzeugorientierungseinheit 5 das Werkzeug 1 in geeigneter Form. Hierzu werden aus den Orientierungsdaten bzw. orientierungsspezifischen Daten geeignete Steuergrößen bzw. Steuerparameter ermittelt, die einem geeigneten Betriebszustand des Werkzeugs 1 entsprechen. Die Berechnung der Steuergrößen bzw. Steuerparameter kann in der Orientierungsbestimmungseinheit 10 oder der Ausgabeeinheit 11 erfolgen.

Ausführungsgemäß wird die Orientierung des Werkzeugs 10 relativ zu der Richtung des Schwerkraftvektors (g) bestimmt. Hierbei kann beispielsweise der relative Winkel zwischen der Längserstreckung L₁ des Werkzeuggriffs des Werkzeugs 1 im Vergleich zur Richtung des Erdbeschleunigungsvektors bestimmt werden. Das Werkzeug 1 ist hierbei im gesamten Raum frei beweglich. Je nach Änderung bzw. nach relativer Orientierung des Werkzeugs 1 zur Richtung der Schwerkraft werden geeignete Daten an die Orientierungsbestimmungseinheit 10 übermittelt. Ausführungsgemäß erfolgt die Übermittlung durch Funkkontakt kabellos.

Ausführungsgemäß ist die Werkzeugorientierungseinheit 5 als externe Vorrichtung zur Werkzeugsteuerung 2 vorgesehen. Hierbei wird die Werkzeugorientierungseinheit 5 über die Schnittstelle 12 der Werkzeugsteuerung 2 mit der Werkzeugsteuerung 2 verbunden. Gemäß einer weiteren Ausführungsformen kann die Werkzeugorientierungseinheit jedoch bereits in dem Gehäuse der Werkzeugsteuerung 2 integriert sein. Die Kommunikation zwischen der Werkzeugorientierungseinheit 5 und der Werkzeugsteuerung 2 kann hierbei über eine geeignete interne Schnittstelle 12 der Werkzeugsteuerung 2 erfolgen. Weiterhin ausführungsgemäß ist der Sensor 30 lösbar an dem Werkzeug 1 befestigt. Die Befestigung kann hierbei im Prinzip an beliebiger Stelle des Werkzeuges 1 erfolgen. Der Sensor 30 ist ausführungsgemäß als dreidimensionaler Beschleunigungssensor 30 ausgeführt. Alternativ hierzu sind auch drei unabhängige eindimensionale Beschleunigungssensoren möglich, welche die unterschiedlichen Beschleunigungskomponenten in drei Richtungen messen können. Aus den Beschleunigungswerten kann die Orientierungsbestimmungseinheit 10 geeignete Orientierungsdaten ermitteln, welche den relativen Winkel zwischen der Richtung der Erdbeschleunigung (e) und der Längserstreckungsrichtung L₁ des Griffs des Werkzeugs 1 bestimmt.

In Fig. 2 ist eine weitere Ausführungsform des erfindungsgemäßen Werkzeugs mit Werkzeugsteuerung dargestellt, welche sich durch die in Fig. 1 dargestellte Ausführungsform lediglich dahin gehend unterscheidet, dass die Kommunikation zwischen Sensor 30 und der Werkzeugorientierungseinheit 5 nicht kabellos sondern kabelgebunden erfolgt. Die von dem Sensor 30 ermittelten Daten werden über eine Leitung 13 der Orientierungsbestimmungseinheit 10 zugeleitet. Die Leitung 13 kann hierbei gemäß einer weiteren Ausführungsform auch in die Verbindung 3 zwischen Werkzeugsteuerung 2 und Werkzeug 1 integriert sein.

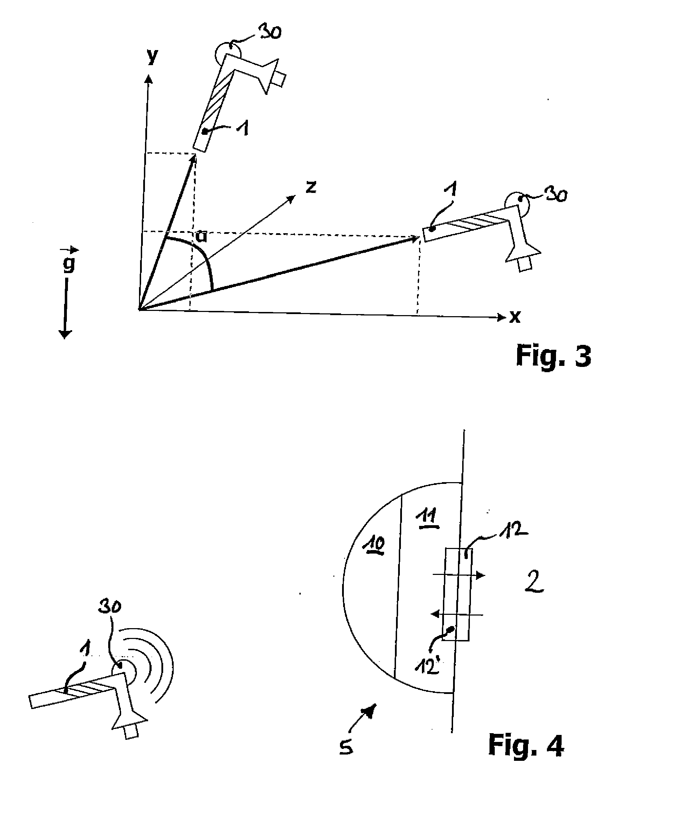

Fig. 3 zeigt eine schematische Darstellung der Ermittlung der Orientierung des Werkzeugs 1 als Orientierungsdaten im Raum. Hierbei sind zwei Positionen des Werkzeugs 1 durch jeweils zwei Positionsvektoren charakterisiert. Die beiden Positionen unterscheiden sich durch einen Winkel α. Hierbei können die Positionsvektoren sowohl unterschiedliche Länge als auch eine unterschiedliche Raumrichtung (symbolisiert durch das dreidimensionale Koordinatensystem mit den Achsen x, y und z) annehmen. Ausführungsgemäß kann die Orientierung des Werkzeugs 1 als Winkeländerung zwischen den beiden Positionsvektoren, d.h. als Winkel α bestimmt werden. Alternativ ist auch möglich, die Orientierung des Werkzeugs 1 relativ zu der Richtung des Schwerkraftvektors, parallel zur y-Achse des dreidimensionalen kartesischen Koordinatensystems, zu bestimmen. Wird nun zu Beginn des Arbeitsprozesses die Lage des Werkzeuges 1 initialisiert, indem es etwa in eine bestimmte Stellung in Bezug auf die Richtung des Erdbeschleunigungsvektors gerichtet wird, können die weiteren Winkeländerungen im Laufe des Arbeitsprozesses mittels der Orientierungsbestimmungseinheit 10 als Orientierungsdaten bestimmt werden. Die Orientierungsdaten werden anschließend dazu verwendet, geeignete Steuergrößen bzw. Steuerparameter für die Steuerung des Werkzeugs 1 zu ermitteln, um eine vorteilhafte orientierungsabhängige Steuerung des Werkzeugs 1 zu erreichen.

Fig. 4 zeigt eine Detailansicht der Werkzeugorientierungseinheit 5 gemäß der Ausführungsform in Fig. 1. Zur Übermittlung der Orientierungsdaten bzw. orientierungsspezifischen Daten durch die Werkzeugorientierungseinheit 5, d.h. durch die Orientierungsbestimmungseinheit 10 und/oder die Ausgabeeinheit 11 an die Werkzeugsteuerung 2 ist eine Schnittstelle 12 der Werkzeugsteuerung 2 vorgesehen. Die Schnittstelle 12 ist hierbei mit einer weiteren Schnittstelle 12' der Ausgabeeinheit 11 zur Kommunikation verbunden. Der Datenaustausch erfolgt ausführungsgemäß zweiseitig, d.h. Daten können von der Ausgabeeinheit 11 sowohl übermittelt als auch aufgenommen werden. Gemäß alternativen Ausführungsformen kann die Schnittstelle 12 bzw. 12' auch nur zur einseitigen Kommunikation vorgesehen sein. Weiterhin kann auch die Kommunikation zur Ausgabe über eine Schnittstelle 12' der Ausgabeeinheit 11 und die Kommunikation zur Aufnahme durch eine weitere nicht gezeigte Aufnahmeeinheit der Werkzeugorientierungseinheit 5 erfolgen.

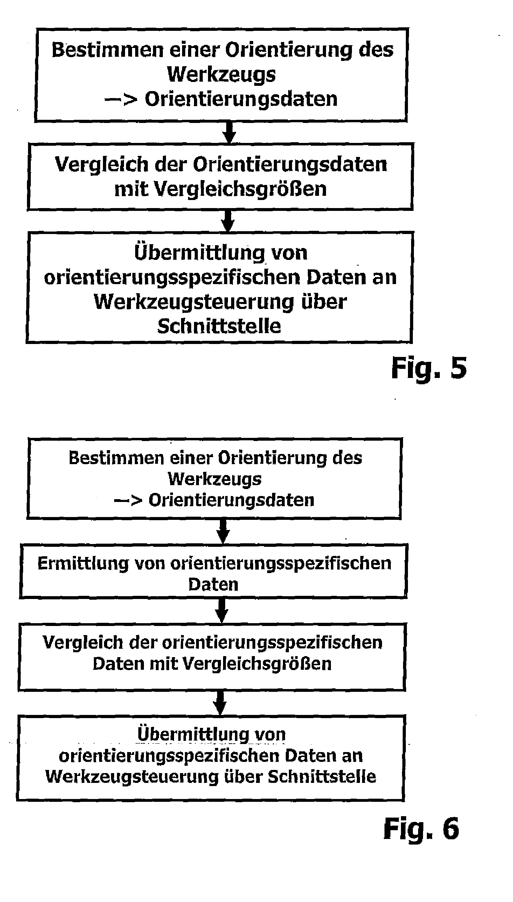

Fig. 5 zeigt eine Ausführungsform des erfindungsgemäßen Verfahrens zur Bestimmung von wenigstens einer Steuergröße eines handgeführten Werkzeugs mit Werkzeugsteuerung, in welchen zunächst die Orientierung des Werkzeugs 1 bestimmt wird. Die Bestimmung der Orientierung ermöglicht die Berechnung bzw. Ermittlung von Orientierungsdaten, welche in einem zweiten Verfahrensschritt mit entsprechenden Vergleichsgrößen, d.h. Vergleichsdaten verglichen werden. Ein Vergleich kann hierbei explizit durch Vergleich einzelner Datenwerte erfolgen, oder aber auch implizit, indem die Orientierungsdaten zur weiteren Verarbeitung verwendet werden und je nach Orientierung unterschiedliche Vergleichsergebnisse resultieren können. So kann beispielsweise eine analoge Regelung die Orientierungsdaten als Regelspannung aufnehmen und entsprechend einer Kennlinie ein weiterer Wert ausgegeben werden. Der Ausgabewert entspricht somit dem Vergleichsergebnis.

Das Vergleichsergebnis bzw. die Orientierungsdaten erlauben die Ermittlung von orientierungsspezifischen Daten, welche vorliegend ausführungsgemäß an die Werkzeugsteuerung 2 über die Schnittstelle 12 der Werkzeugsteuerung 2 übermittelt werden..

Entsprechend einer weiteren Ausführungsform des erfindungsgemäßen Verfahrens können die Orientierungsdaten auch vor Vergleich mit Vergleichsgrößen zur Berechnung von orientierungsspezifischen Daten dienen. Ein solches Verfahren ist in Fig. 6 schematisch in einem Flussdiagramm dargestellt. Nach Berechnung bzw. Ermittlung der orientierungsspezifischen Daten aus den Orientierungsdaten werden diese mit entsprechenden Vergleichsgrößen verglichen. Der Vergleich kann wiederum in der Werkzeugorientierungseinheit 5 erfolgen. Nach erfolgreich ausgeführtem Vergleich können die aus den orientierungsspezifischen Daten ermittelten Steuerparameter in gleicher Form bzw. in veränderter Form an die Werkzeugsteuerung über die Schnittstelle 12 der Werkzeugsteuerung 2 übermittelt werden. In den in Fig. 5 und Fig. 6 schematisch dargestellten Ausführungsformen des erfindungsgemäßen Verfahrens wird abschließend noch wenigstens eine Steuergröße des Werkzeugs zur Steuerung des Werkzeugs 1 bestimmt.

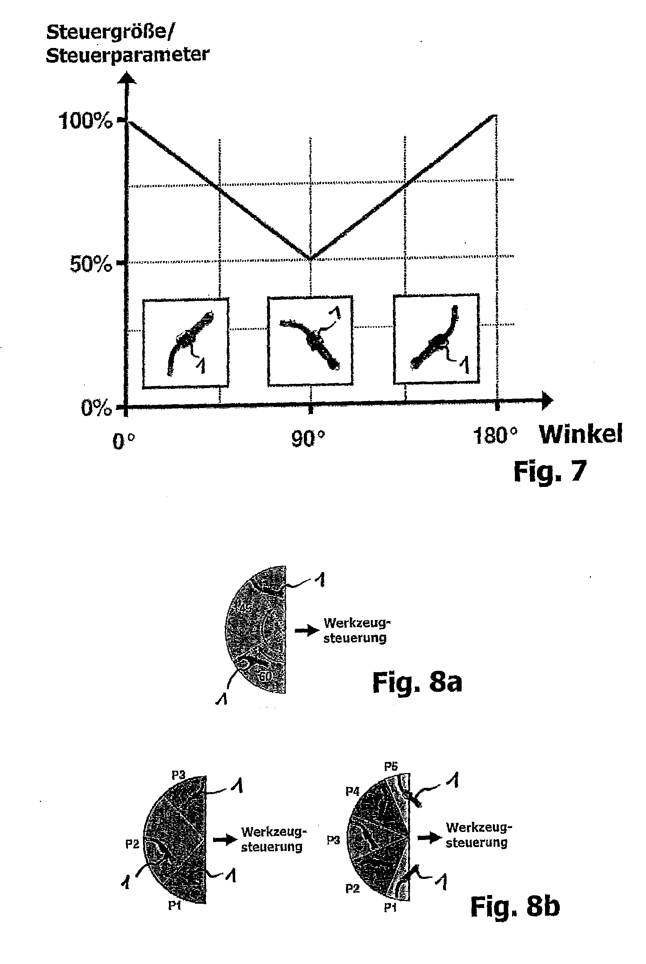

Fig. 7 zeigt eine schematische Darstellung der relativen Regelung bzw. Bestimmung wenigstens einer Steuergröße bzw. eines Steuerparameters im Vergleich zu einer absoluten Bestimmung. Bei der relativen Bestimmung wird gemäß der Orientierung des Werkzeugs 1 im Raum in einer Anfangslage ein Basiswert bzw. Referenzwert vorgegeben. Vorliegend wird der gesamte Referenzwert bei einer Null-Grad-Stellung als 100% vorgegeben. Alternativ kann dieser Wert auch bei einer 180 Grad-Stellung des Werkzeugs 1 vorgegeben werden. Der Winkel bezieht sich auf einen relativen Abweichungswert zwischen einem Initialisierungspositionsvektor zur Darstellung der Lage des Werkzeugs 1 im Raum im Vergleich zur Richtung des Erdbeschleunigungsvektors. Der Initialisierungsvektor ist vorliegend nicht gezeigt. Bei Veränderung der Orientierung in eine 90°-Stellung wird der relative Wert der zu bestimmenden bzw. zu regelnden Steuergröße bzw. Steuerparameter auf 50% des ursprünglichen Werts vermindert. Hierbei kann zwischen den Werten eine lineare Interpolation vorgenommen werden. Bei Veränderung der Werkzeugorientierung wird der Wert der Steuergröße bzw. der Steuerparameter also prozentual verändert, wobei die relative Veränderung in den dargestellten Extrempositionen (Null Grad-Winkelstellung, 90 Grad-Winkelstellung und 180 Grad-Winkelstellung) vorbestimmt sind. Alternativ kann zwischen diesen Extremstellungen auch jede andere Art der sinnvollen Interpolation erfolgen.

Gemäß einer konkreten Ausführungsform kann durch die Relativwertbestimmung bzw. relative Regelung die Steuerspannung bzw. der Steuerstrom eines Schweißbrenners von einer Null Grad-Stellung (Wannenposition, PA) zu einer 90 Grad-Stellung (Senkrechtposition PF, PG) gezielt vermindert werden.

Fig. 8a zeigt eine schematische Darstellung einer kontinuierlichen Bestimmung bzw. Regelung wenigstens einer Steuergröße des Werkzeugs 1 bzw. eines Steuerparameters mittels einer kontinuierlichen analogen Regelung. Hierbei wird die Orientierung des Werkzeugs 1 aus einer anfänglichen 60°-Stellung in eine 145°-Stellung kontinuierlich verfolgt. Die Veränderung der Orientierung wird als Orientierungs daten über die Schnittstelle 12 zur Werkzeugsteuerung 2 übermittelt. Dort kann entsprechend der Veränderung der Orientierung des Werkzeugs 1 eine Änderung wenigstens einer Steuergröße bzw. eines Steuerparameters vorgenommen werden.

Anders verhält es sich in der in Fig. 8b dargestellten diskreten Bestimmung bzw. diskreten Regelung, welche vorbestimmte Orientierungsbereiche bzw. Orientierungssektoren vorsieht. Je nach Orientierungsbereich bzw. Orientierungssektor werden unterschiedliche Steuergrößen bzw. Steuerparameter ermittelt, welche eine vorteilhafte Ausführung des Arbeitsverfahrens ermöglichen. Die auf der linken Seite in Fig. 8b dargestellte Ausführungsform unterscheidet beispielsweise in drei Sektoren P1, P2 und P3. Die auf der rechten Seite in Fig. 8b dargestellte Ausführungsform unterscheidet in insgesamt fünf Orientierungsbereiche bzw. Orientierungssektoren P1, P2, P3, P4, und P5. Wird die Orientierung des Werkzeugs 1 innerhalb eines solchen Orientierungsbereichs bzw. Orientierungssektors verändert, wird keine Veränderung der Steuergröße bzw. des Steuerparameters durch die Werkzeugorientierungseinheit 5 vorgenommen. Demnach ist auch eine kontinuierliche Orientierungsbestimmung des Werkzeugs 1 nicht erforderlich, sondern kann durch eine diskrete Regelung bzw. Bestimmung ersetzt werden.

An dieser Stelle sei darauf hingewiesen, dass alle oben beschriebenen Teile für sich alleine gesehen und in jeder Kombination, insbesondere die in den Zeichnungen dargestellten Details als erfindungswesentlich beansprucht werden. Abänderungen hiervon sind dem Fachmann geläufig.

### Bezugszeichen:

- 1: Werkzeug
- 2: Werkzeugsteuerung
- 3: Verbindung
- 5: Werkzeugorientierungseinheit

- 10: Orientierungsbestimmungseinheit
- 11: Ausgabeeinheit
- 12: Schnittstelle
- 12': Schnittstelle
- 13: Leitung
- 15: Positionierungseinheit
- 16: Positionierungsunterstützungseinheit

- 20: Potentiometer
- 30: Sensor

## Patentansprüche

1. Handgeführtes Werkzeug (1) und Werkzeugsteuerung (2) umfassend:
- eine Orientierungsbestimmungseinheit (10), die ausgebildet ist, eine Orientierung des Werkzeugs (1) als Orientierungsdaten oder orientierungsspezifische Daten zu bestimmen,
- eine Ausgabeeinheit (11), welche mit der Orientierungsbestimmungseinheit (10) in Wirkverbindung steht und Daten an die Werkzeugsteuerung (2) über eine zur Kommunikation geeignete Schnittstelle (12) übermitteln kann, **dadurch gekennzeichnet, dass**
die Orientierungsbestimmungseinheit (10) und/oder die Ausgabeeinheit (11) geeignet ist mindestens einen Steuerparameter, insbesondere eine Vielzahl von Steuerparametern, nach Vergleich der Orientierungsdaten bzw. der orientierungsspezifischen Daten mit Vergleichsgrößen zu ermitteln, wobei der mindestens eine Steuerparameter an die Werkzeugsteuerung (2) zur Steuerung des Werkzeugs (1) übermittelt werden kann.

2. Werkzeug und Werkzeugsteuerung nach Anspruch 1,
**dadurch gekennzeichnet, dass** Orientierungsbestimmungseinheit (10) und Ausgabeeinheit (11) ein gemeinsames Modul ausbilden, insbesondere in einem gemeinsamen Gehäuse untergebracht sind, wobei das Modul aus Orientierungsbestimmungseinheit (10) und Ausgabeeinheit (11) vorzugsweise mit der Werkzeugsteuerung (2) verbunden ist oder mit dem handgeführten Werkzeug (1) verbunden ist.

3. Werkzeug und Werkzeugsteuerung nach Anspruch 1 oder 2,
**dadurch gekennzeichnet, dass**
die Orientierungsbestimmungseinheit (10) einen Speicher umfasst und ausgebildet ist, um eine Abhängigkeit zwischen mindestens einem Steuerparameter und den Orientierungsdaten, insbesondere Schweißpositionen, zu dokumentieren.

4. Werkzeug und Werkzeugsteuerung nach einem der vorhergehenden Ansprüche, **dadurch gekennzeichnet, dass**
die Ausgabeeinheit (11) geeignet ist, an die Werkzeugsteuerung (2) Steuerparameter, insbesondere wenigstens eine Steuergröße zu übermitteln, welche an ein Kommunikationsprotokoll der Werkzeugsteuerung (2) angepasst sind/ist.

5. Werkzeug und Werkzeugsteuerung nach einem der vorhergehenden Ansprüche, **dadurch gekennzeichnet, dass**
die Orientierungsbestimmungseinheit (10) und/oder die Ausgabeeinheit (11) als übergeordnete Regelung der Werkzeugsteuerung (2) vorgeschaltet sind.

6. Werkzeug und Werkzeugsteuerung nach einem der vorhergehenden Ansprüche, **dadurch gekennzeichnet, dass**
die Orientierungsbestimmungseinheit (10) und/oder die Ausgabeeinheit (11) ein, ggf. analoges oder digitales, steuerbares Potentiometer (20) aufweist, welches erlaubt, den mindestens einen Steuerparameter für die Werkzeugsteuerung (2) einzustellen.

7. Werkzeug und Werkzeugsteuerung nach einem der vorhergehenden Ansprüche sowie Anspruch 5,
**dadurch gekennzeichnet, dass**
die orientierungsspezifischen Daten in einer Relativwertgenerierungseinheit als relative Größen ausgegeben werden, die einen von der Werkzeugsteuerung (2) vorgegebenen Stellwert um einen bestimmten Prozentsatz erhöhen oder erniedrigen derart, dass die Orientierungsbestimmungseinheit (10) und/oder die Ausgabeeinheit (11) als übergeordnete Regelung ein von der Werkzeugsteuerung (2) vorgegebenes, eingehendes Stellsignal unter Verwendung der relativen Größe der Relativwertgenerierungseinheit um den bestimmten Prozentsatz erhöht oder erniedrigt und wieder an die Werkzeugsteuerung (2) abgibt, wobei
der Referenzwert vorzugsweise über die Schnittstelle (12) an die Orientierungsbestimmungseinheit (10) und/oder die Ausgabeeinheit (11) übermittelt wird, wobei
der Referenzwert vorzugsweise durch die Orientierungsbestimmungseinheit (10) und/oder die Ausgabeeinheit (11) fest vorgegeben ist.

8. Werkzeug und Werkzeugsteuerung nach einem der vorhergehenden Ansprüche, **dadurch gekennzeichnet, dass**
die Schnittstelle (12) zur Kommunikation mit externen Geräten geeignet ist, insbesondere eine Fernreglerschnittstelle umfasst.

9. Werkzeug und Werkzeugsteuerung nach einem der vorhergehenden Ansprüche, **dadurch gekennzeichnet, dass**
die Werkzeugsteuerung (2) oder die Orientierungsbestimmungseinheit eine Positionierungseinheit (15) bzw. Positionierungsunterstützungseinheit (16) aufweist, die erlaubt, Orientierungsdaten bzw. orientierungsspezifische Daten zur Positionierung des Werkzeugs (1) bzw. zur Unterstützung der zur Positionierung des Werkzeugs (1) zu verarbeiten.

10. Werkzeug und Werkzeugsteuerung nach einem der vorhergehenden Ansprüche, **dadurch gekennzeichnet, dass**
das Werkzeug (1) ein Schweißwerkzeug ist oder ein Fügewerkzeug ist oder ein Bohrwerkzeug oder ein Fräswerkzeug oder ein Werkzeug zur Durchführung von Beschichtungen, beispielsweise eine Sprühpistole, ist ist.

11. Werkzeug und Werkzeugsteuerung nach einem der vorhergehenden Ansprüche, **dadurch gekennzeichnet, dass**
die Schnittstelle (12) ein integriertes Bus-System einer Anlagensteuerung umfasst.

12. Werkzeugorientierungseinheit geeignet zum Zusammenwirken mit einer Werkzeugsteuerung (2) eines handgeführten Werkzeugs (1), vorzugsweise geeignet zum Zusammenwirken mit einer Werkzeugsteuerung (2) eines handgeführten Werkzeugs (1) gemäß einem der vorhergehenden Ansprüche, umfassend:
- eine Orientierungsbestimmungseinheit (10), welche erlaubt, die Orientierung eines Werkzeugs (1) als Orientierungsdaten oder orientierungsspezifische Daten zu bestimmen,
- eine Ausgabeeinheit (11), welche mit der Orientierungsbestimmungseinheit (10) in Wirkverbindung steht und Daten ausgeben kann, wobei die Ausgabe über eine Schnittstelle (12') der Ausgabeeinheit (11) erfolgt, welche geeignet ist, mit einer Schnittstelle (12) der Werkzeugsteuerung (2), insbesondere einer Schnittstelle (12) zur Kommunikation mit externen Geräten der Werkzeugsteuerung (2) verbunden zu werden,
**dadurch gekennzeichnet, dass** die Orientierungsbestimmungseinheit (10) und/oder die Ausgabeeinheit (11) geeignet ist, mindestens einen Steuerparameter nach Vergleich der Orientierungsdaten bzw. der orientierungsspezifischen Daten mit Vergleichsgrößen, zu ermitteln, wobei der mindestens eine Steuerparameter an die Werkzeugsteuerung (2) zur Steuerung des Werkzeugs (1) übermittelt werden kann.

13. Verfahren zur Bestimmung von wenigstens einer Steuergröße eines handgeführten Werkzeugs (1) mit einer Werkzeugsteuerung (2), welches folgende Schritte aufweist:
- Bestimmen wenigstens einer Orientierung des Werkzeugs (1) im Raum als Orientierungsdaten mittels einer Orientierungsbestimmungseinheit (10);
- Bestimmung mindestens eines Steuerparameters des Werkzeuges (1) nach Vergleich der Orientierungsdaten bzw. orientierungsspezifischen Daten mit Vergleichsgrößen durch die Orientierungsbestimmungseinheit;
- Übermittlung des mindestens einen Steuerparameters an die Werkzeugsteuerung (2) durch eine Ausgabeeinheit (11), welche mit der Orientierungsbestimmungseinheit (10) in Wirkverbindung steht, über eine zur Kommunikation geeignete Schnittstelle (12).

14. Verfahren nach Anspruch 13,
**dadurch gekennzeichnet, dass** die Kommunikation über die Schnittstelle (12) analog oder digital erfolgt.

15. Verfahren nach Anspruch 13 oder 14,
**dadurch gekennzeichnet, dass** eine kontinuierliche Steuerung mittels einer analogen Regelung bzw. Steuerung erfolgt.

16. Verfahren nach einem der Ansprüche 13 bis 15,
**dadurch gekennzeichnet, dass** der Vergleich der Orientierungsdaten bzw. orientierungsspezifischen Daten mit Vergleichsgrößen durch einen Vergleich mit gespeicherten Vergleichsdaten erfolgt.

17. Verfahren nach einem der Ansprüche 13 bis 16,
**dadurch gekennzeichnet, dass** die Bestimmung der orientierungsspezifischen Daten relativ zu einem vorbestimmten Referenzwert erfolgt, wobei der Referenzwert in Abhängigkeit von werkzeugspezifischen und/oder materialspezifischen Betriebsgrößen bestimmt wird.

18. Verfahren nach einem der Ansprüche 13 bis 17,
**dadurch gekennzeichnet, dass** die Bestimmung der wenigstens einen Steuergröße in Abhängigkeit vorbestimmter, möglicher Orientierungsbereiche, insbesondere in Abhängigkeit vorbestimmter, möglicher Orientierungssektoren des Werkzeugs (1) erfolgt.
